# FASCICULE DE BREVET EUROPEEN

(11) **EP 1 150 407 B1**
(45) Date de publication et mention de la délivrance du brevet: **23.06.2004**
(21) Numéro de dépôt: 01490015.3
(22) Date de dépôt: 25.04.2001
(51) Int. Cl.: H02G 3/04

(54) **Troncon de chemin à câbles en treillis de fils et chemin à câbles obtenu par assemblage d'au moins deux des dits troncons**
Kabelrinnenabschnitt aus Drahtgitter und daraus hergestellte Kabelrinne durch Verbindung von zwei Abschnitten
Section of cableway made of wire mesh and cableway obtained by assembling two sections

(30) Priorité: 26.04.2000 FR 0005268
(43) Date de publication de la demande: 31.10.2001
(73) Titulaire: Tolmega, 62400 Bethune (FR)
(72) Inventeur: de L'Hamaide, Nicolas, 62400 Bethune (FR)
(74) Mandataire: Hénnion, Jean-Claude

(56) Documents cités:
- EP-A- 0 352 191
- DE-A- 4 336 168
- DE-U- 7 539 058

## Description

L'invention se rapporte au domaine technique des systèmes de supports de câbles, notamment de câbles électriques et/ou de câbles de télécommunications ou équivalents.

On connaît dans l'art antérieur trois grands types de supports de câbles : les échelles à câbles, les chemins à câbles en treillis de fils, et les goulottes.

L'invention se rapporte plus particulièrement aux chemins à câbles en treillis de fils.

Ces chemins à câbles en treillis de fils sont conventionnellement réalisés par assemblage de :
- fils longitudinaux, communément appelés fils de chaîne, courant longitudinalement, de manière typiquement rectiligne ou quasi rectiligne sur toute leur longueur ;
- fils transversaux, communément appelés fils de trame, établis transversalement, de place en place, le long de ces fils de chaîne.

Les fils de chaîne et les fils de trame sont le plus souvent en alliage métallique et leur assemblage est conventionnellement réalisé par soudage.

Les fils de trame sont typiquement en U, de sorte que le chemin à câbles en treillis comprend un panneau de fond et deux panneaux latéraux, communément appelés ailes.

Par « fils » on désigne ici aussi bien des profilés pleins de section transversale sensiblement ovale ou circulaire, que des profilés de section transversale carrée ou rectangulaire.

Les fils de trames peuvent notamment se présenter sous forme de bandes étroites, de section transversale rectangulaire

De tels chemins à câbles en treillis de fils sont couramment utilisés pour assurer le soutien, le logement et la protection de câbles électriques, de câbles ou fibres de télécommunications ou similaires.

Des exemples de tels chemins à câbles peuvent être trouvés dans les documents suivants :
- demandes de brevet français publiées sous les numéros 2 376 539, 2 576 158, 2 599 906, 2 613 146, 2 617 341, 2 628 904, 2 634 600, 2 645 359, 2 652 206, 2 652 142, 2 669 708, 2 686 393, 2 687 207, 2 691 590, 2 697 313, 2 697 690, 2 698 416, 2 706 973, 2 716 242, 2 716 768, 2 723 270, 2 725 772, 2 725 846, 2 727 186, 2 728 649, 2 734 503, 2 737 355, 2 750 754, 2 766 897 ;
- demandes de brevet européen publiées sous les numéros 0191667, 0229544, 0275185, 0298825, 0352191, 0355081, 0390668, 0399790, 0418167, 0553039, 0556137, 0571307, 0617493, 0718944, 0818862, 0905843 ;
- demandes internationales de brevet publiées sous les numéros 96/08063,99/06746 ;
- demandes de brevet allemandes publiées sous les numéros DE-A-2036325, DE-A-4037412, DE-4336168.

Pour éviter que les parties extrêmes des fils de trames ne puissent blesser les câbles, notamment lors de la mise en place de ces câbles, un grand nombre de solutions ont été envisagées dans l'art antérieur.

Ainsi, par exemple :
- dans le document FR-2 697 313, il est proposé que les extrémités des fils de trames soient arrondies et présentent une surface lisse pour faciliter le glissement des câbles électriques sur celles-ci lors de leur manipulation ;
- le document DE-4336168 propose l'usinage des extrémités des fils transversaux ;
- dans les documents FR-A-2 617 341 et EP-A-0 298 825, il est proposé que des fils de rive constituent les bords supérieurs des ailes verticales d'un chemin à câbles, ces fils de rive étant soudés dans une position telle qu'au point de soudure, les axes des fils de rive et les axes des fils de trame soient sensiblement dans un même plan ;
- dans les documents FR-A-2 634 600 et EP-A-0 352 191, il est proposé que des fils longitudinaux de rives soient soudés au voisinage des extrémités des fils de trame, ce soudage étant réalisé du côté opposé à celui du soudage sur les fils de trame des autres fils de chaîne des ailes du chemin à câble, les fils longitudinaux de rive étant, de plus, repliés au voisinage des fils transversaux de sorte à les contourner.

La diversité et la complexité des solutions proposées dans l'art antérieur illustre la difficulté pratique à résoudre le problème technique des risques de blessures des câbles sur les parties extrêmes des fils de trame.

Par rapport à l'état de la technique, l'invention vise à fournir un type de structure pour chemin à câbles en treillis de fils permettant de résoudre ce problème technique de manière plus simple et plus sûre, et cependant moins coûteuse.

A cette fin, l'invention se rapporte, selon un premier aspect, à un tronçon de chemin à câbles en treillis de fils, comprenant des fils longitudinaux, dits fils de chaîne, disposés suivant une direction D1, et des fils transversaux, dits fils de trame, établis transversalement, de place en place, le long de ces fils de chaîne, les fils de trames étant pourvus d'une section de base et de deux sections latérales, l'assemblage des fils de chaîne et des fils de trame définissant pour le tronçon une paroi de fond et deux ailes latérales, les ailes latérales étant obtenues par assemblage des fils dé chaîne et des sections latérales des fils de trame, au moins un des fils de trame du tronçon comprenant, sur au moins une de ses deux sections latérales, une partie supérieure de cette section latérale et une partie extrême de celle-ci courbées dans un même plan, dit plan de courbure, ce plan de courbure contenant la direction D1 longitudinale, cette courbure assurant la disposition de l'extrémité de la section latérale en dessous du plan tangent T au bord supérieur de cette section latérale.

Dans un premier type de réalisation, la partie supérieure de ladite section latérale s'étend sensiblement dans un plan transversal, perpendiculaire à la direction D1 et la partie extrême de ladite section latérale est courbée sensiblement perpendiculairement à la partie supérieure de cette section latérale, de sorte à s'étendre sensiblement parallèlement à la direction D1.

Dans un deuxième type de réalisation, la partie extrême de ladite section latérale est courbée en U, en V, en pseudo U, en pseudo V. Par pseudo U, on désigne ici des formes en U dans lesquelles les ailes et/ou la paroi de fond ne sont pas parfaitement rectilignes, la forme générale restant proche d'un U.

Dans un troisième type de réalisation, la partie extrême de ladite section latérale est courbée en crosse, l'extrémité et la partie supérieure de cette section latérale étant sensiblement en regard.

Selon un mode de réalisation particulier, l'extrémité et la partie supérieure de ladite section latérale sont sensiblement en contact.

Ledit plan de courbure est, le cas échéant, sensiblement parallèle au plan d'extension moyen de l'aile du tronçon contenant ladite section latérale du fil de trame.

En variante, le plan de courbure forme un angle avec le plan d'extension moyen de la partie inférieure de ladite section latérale du fil de trame.

Dans un mode de réalisation, le tronçon comprend au moins un fil de trame dont les deux parties extrêmes sont courbées, de manières sensiblement identiques, dans des plans de courbure Q1, Q2 sensiblement parallèles aux plans d'extensions moyen des deux ailes du tronçon.

Le cas échéant, le tronçon peut présenter les caractères suivants, éventuellement combinés :
- il comprend un plan de symétrie S perpendiculaire à la paroi de fond et contenant la direction longitudinale D1 de disposition des fils de chaîne ;
- il présente une section transversale en U, ses deux ailes étant sensiblement parallèles et s'étendant perpendiculairement à la paroi de fond ;
- la partie extrême courbée d'au moins une section latérale de fil de trame saille d'une hauteur h au-delà du fil de chaîne supérieur de l'aile du tronçon sur laquelle est montée ladite section latérale ;
- les fils de chaînes sont au moins en partie disposés en face externe des fils de trame.

Dans un premier mode de disposition des fils de trame, ceux-ci sont sensiblement identiques et équidistants les uns des autres, leur section de base et la partie inférieure de leurs sections latérales s'étendant sensiblement transversalement selon des plans P1, P2, les parties extrêmes courbées des sections latérales formant des saillies par rapport à ces plans P1, P2, ces saillies étant toutes tournées dans le même sens, le long dudit tronçon.

Dans un deuxième mode de disposition des fils de trames, au moins deux fils de trames sont disposés de telle sorte que les parties extrêmes courbées d'au moins une de leur section latérale soient en regard l'une de l'autre.

Dans une réalisation particulière, les fils de trames sont disposés par paires, chacune desdites paires comprenant deux fils de trame dont les parties extrêmes courbées des sections latérales sont disposées en regard.

Le cas échéant, les parties extrêmes courbées des fils de trame d'au moins une paire de fils de trame sont disposées en contact.

Le tronçon peut comporter, sur au moins une de ses ailes, un fil de chaîne pourvu d'ondulations définissant des creux internes, la partie extrême courbée des fils de trame venant se loger, au moins en partie, dans l'espace défini par ces creux internes, la profondeur des creux internes étant le cas échéant sensiblement égale ou supérieure à l'épaisseur de la partie extrême courbée des fils de trame.

Selon un mode de réalisation, ce fil de chaîne pourvu d'ondulations est assemblé sur la face externe des fils de trame.

Dans d'autres modes de réalisation, ce fil de chaîne pourvu d'ondulations est assemblé sur la face interne des fils de trame, ledit tronçon étant de plus pourvu d'un fil de rive, les parties extrêmes courbées des fils de trame s'étendant dans les creux externes formés par le fil de chaîne ondulé.

Dans une variante particulière, le plan R, tangent à l'ouverture des creux externes du fil ondulé, est disposé en retrait vers l'intérieur du tronçon, par rapport au fil de rive.

D'autres objets et avantages de l'invention apparaîtront au cours de la description suivante de modes de réalisation, description qui va être effectuée en se référant aux dessins annexés, dans lesquels :
- la figure 1 est une vue en perspective d'un tronçon de chemin à câble en treillis de fil, selon un mode de réalisation de l'invention ;
- la figure 2 est une vue latérale, selon la flèche F2 de la figure 1 ;
- la figure 3 est une vue du même type que celle de la figure 2, pour une variante de réalisation dans laquelle au moins un fil de trame est externe par rapport aux fils de chaîne ;
- la figure 4 est une vue selon la flèche F4 de la figure 1 ;
- la figure 5 est une vue du même type que celle de la figure 4, pour le mode de réalisation représenté en figure 3 ;
- les figures 6 et 7 sont des vues analogues à celle des figures 4 et 5, ces figures 6 et 7 représentant deux variantes de mises en place des fils de trame ;
- la figure 8 est une vue de détail d'une variante de réalisation de la partie extrême des ailes des chemins à câbles selon l'invention ;
- les figures 9 à 11 sont des vues latérales de détail de variantes de réalisations des fils de trame et de leur courbure supérieure ;
- la figure 12 est une vue de détail d'une variante de réalisation, dans laquelle au moins un fil de rive externe est ondulé ;
- la figure 13 est une vue selon la flèche F13 de la figure 12 ;
- la figure 14 est une vue du même type que celle de la figure 12, pour un mode de réalisation dans lequel un fil de rive interne est ondulé.

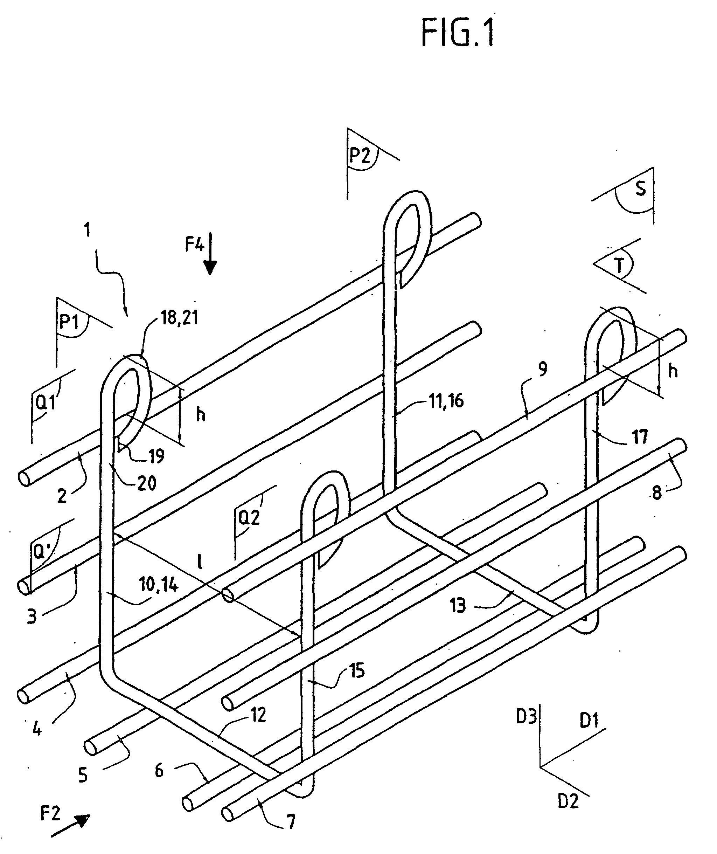

On se rapporte tout d'abord aux figures 1, 2 et 4.

Le tronçon 1 de chemin à câbles en treillis de fil (par la suite dénommé simplement le tronçon 1) comprend des fils de chaîne (2 à 9) et des fils de trame.

Seuls deux fils de trame 10,11 sont représentés sur la figure 1.

Les fils de chaîne 2-9 sont, dans la réalisation de la figure 1, sensiblement parallèles entre eux et de sections transversales circulaire identiques.

Ces fils de chaînes 2-9 s'étendent parallèlement à une direction D1. Cette direction D1 sera dite horizontale, pour la commodité de la description. Il est entendu toutefois que cette direction D1 peut être inclinée par rapport à l'horizontale lorsque le tronçon 1 a été mis en place sur son lieu d'utilisation.

Dans certains modes de réalisation, non représentés, les fils de chaînes sont de sections circulaires mais de diamètres différents, ou de sections différentes. Par exemple, au moins un fil de chaîne est de section carrée, rectangulaire ou polygonale.

Dans le mode de réalisation de la figure 1, le tronçon 1 comprend des fils de trame 10,11 en U s'étendant sensiblement parallèlement entre eux suivant des plans P1, P2 perpendiculaires à la direction D1.

Plus précisément, chaque fil de trame 10,11 comprend :
- une section dite de base 12,13 s'étendant suivant une direction D2 sensiblement perpendiculaire à D1 ;
- deux sections latérales 14,15 ;16,17 parallèles à une direction D3 formant un trièdre direct avec les directions D1 et D2.

Afin de faciliter la description, la direction D2 sera prise horizontale, la direction D3 étant donc verticale, le tronçon 1 ayant son ouverture vers le haut. Il est entendu toutefois que le tronçon 1 peut être mis en place avec son ouverture ouverte vers le côté. Il est entendu également que les fils de trames peuvent avoir, dans d'autres modes de réalisation, des sections latérales non verticales, mais inclinées par exemple à 45° par rapport à la direction D3.

Dans le mode de réalisation de la figure 1, les sections de base 12,13 des fils de trame 10,11 sont assemblées sur deux fils de chaînes 5,6, ce premier assemblage formant fonctionnellement paroi de fond au tronçon 1.

Les sections latérales 14,15,16,17 des fils de trame sont, quant à elles, assemblées chacune sur trois fils de chaînes 2,3,4 ;7,8,9, ce second assemblage formant fonctionnellement deux ailes latérales au tronçon 1.

Il est entendu toutefois que le tronçon peut éventuellement ne pas comporter de fil de chaîne pour sa paroi de fond, notamment lorsque celle ci est de largeur l faible.

Le tronçon peut, dans d'autres modes de réalisation, comporter un, deux, ou plus de deux fils de chaînes pour sa paroi de fond, notamment lorsque celle-ci est de grande largeur.

De même, le tronçon peut comporter un, deux, ou plus de deux fils de chaînes sur chacune de ses ailes, le nombre de fils de chaîne étant ou non identique sur les deux ailes.

Dans le mode de réalisation représenté en figure 1, les fils de chaînes des ailes du tronçon sont sensiblement équidistantes. Dans d'autres modes de réalisation, sur au moins une des ailes, les fils de chaînes ne sont pas équidistants.

De même, les fils de chaînes de la paroi de fond du tronçon peuvent être équidistants ou non.

Les fils de trames 10,11 sont, dans le mode de réalisation de la figure 1, disposés à l'intérieur des fils de chaînes 2-9. Ainsi qu'il apparaîtra par la suite, dans d'autres modes de réalisation, au moins un fil de trame est disposé à l'extérieur des fils de chaîne.

Le tronçon 1 représenté en figure 1 est pourvu d'un plan de symétrie d'ensemble S parallèle et médian aux deux ailes du tronçon. Dans d'autres modes de réalisation, le tronçon est dépourvu d'un tel plan de symétrie, par exemple pour les raisons suivantes :
- les ailes du tronçon sont de hauteurs différentes, ou portent des fils de chaîne en nombre différents ;
- les ailes du tronçon ne sont pas sensiblement parallèles entre elles.

Compte tenu de la symétrie par rapport au plan S pour le mode de réalisation représenté en figure 1, seule une partie extrême du fil de trame 10 va maintenant être décrite en détail en référence à cette figure 1.

Cette partie extrême 18 comprend, en allant vers son extrémité libre 19 :
- la partie supérieure 20 de la section latérale 14 du fil de trame 10 ;
- une partie courbée en crosse 21.

La partie supérieure 20 de la section latérale 14 du fil de trame 10 s'étend suivant un plan moyen Q, ce plan Q étant également le plan d'extension moyen de la partie courbée en crosse 21.

Ce plan Q est, dans la mode de réalisation de la figure 1, sensiblement celui dans lequel s'étend toute la section latérale 14. Dans d'autres types de réalisations, non représentés, ce plan Q est incliné par rapport au plan moyen d'extension Q' de la base de cette section latérale. L'angle entre les plans Q et Q' peut être rentrant ou sortant, le chemin à câbles ayant ainsi une ouverture plus large ou moins large que sa paroi de fond.

Le cas échéant, seuls certains des fils de trame du tronçon 1 présentent des plans Q et Q' inclinés l'un par rapport à l'autre. En variante particulière, seule une des deux sections latérales des fils de trame est telle que les angles Q et Q' sont inclinés. Par exemple, toutes les sections latérales d'un côté du tronçon sont de ce type, ce tronçon présentant alors une première aile sensiblement droite et une seconde aile à partie extrême incurvée vers l'intérieur ou vers l'extérieur.

Ainsi qu'il est représenté en figure 1, la courbure de la partie 21 est telle que l'extrémité libre 19 du fil de trame 10 vient sensiblement en regard de la partie supérieure 20 de ce fil de trame.

Dans un mode de mise en oeuvre particulier, cette extrémité 19 vient au contact de la partie supérieure 20 de la section latérale 14 du fil de trame 10.

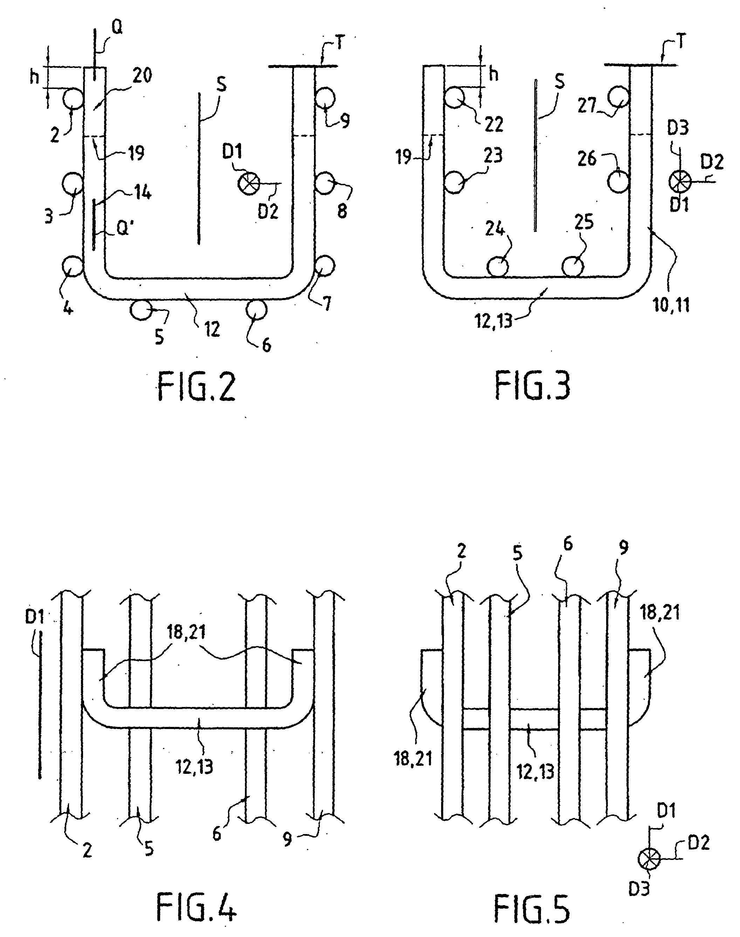

Lorsque le tronçon est vu selon la flèche F2, c'est à dire suivant la direction D1, l'extrémité 19 du fil de trame 10 est ainsi masquée par la partie supérieure 20 de la section latérale 14. Ce masquage est illustré en figure 2.

La partie courbée en crosse 21 saillie, dans le mode de réalisation de la figure 1, au-delà du fil de chaîne supérieur 2 de l'aile, sur une hauteur h. Le cas échéant, cette partie supérieure saillante est repliée vers l'intérieur ou vers l'extérieur de l'aile du tronçon.

La hauteur h de saillie de la partie courbée en crosse 21, par rapport au fil de chaîne supérieur 2 de la première aile du tronçon, peut être identique ou non pour chaque fil de trame. Il en va de même pour la saillie de la partie courbée en crosse par rapport au fil de chaîne supérieur de la seconde aile du tronçon.

Les formes et dimensions des deux parties en crosse 21 des sections latérales d'un fil de trame donné peuvent être identiques ou non.

L'assemblage des fils de chaînes 2-9 et des fils de trame 10-11-peut être réalisé par soudage, collage ou tout autre procédé équivalent choisi en fonction des matériaux constituant les fils de chaîne et de trame.

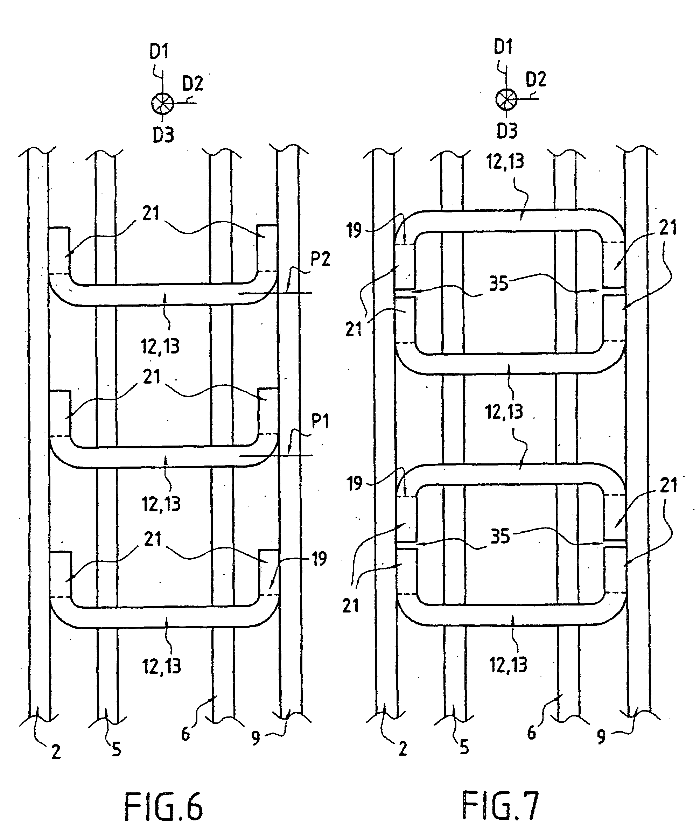

Les figures 3 et 5 illustrent un type de réalisation pouvant être combiné avec chacun des aspects mentionnés ci dessus en référence aux modes de réalisations des figures 1,2, et 4 ou à ses variantes.

Dans le type de réalisation de la figure 3, les fils de chaîne 22-27 sont disposés à l'intérieur d'au moins un fil de trame 10,11.

En variante, le tronçon peut comporter des fils de chaînes assemblés sur la face externe des fils de trame, et des fils de chaîne assemblés sur la face interne des fils de trame.

En revanche, le tronçon peut comporter deux ailes, les parties supérieures courbées en crosse 21 des fils de trames ne saillant pas au-delà de fils de chaînes formant fils de rive.

Les figures 6 et 7 illustrent schématiquement deux modes de mise en place des fils de trame successifs sur le tronçon 1.

Ces modes de mises en place peuvent être combinés avec chacune des dispositions mentionnées auparavant en références aux modes de réalisations des figures 1 à 5.

Dans la mise en place représentée en figure 6, les fils de trame sont tous orientés de manière identique. A contrario, comme représenté dans la figure 7, deux fils de trame successifs peuvent être orientés en opposition, c'est à dire leurs parties courbées en crosse 21 se faisant face. Les paires de fils de trame ainsi formées peuvent être équidistantes ou non. Les parties courbées en crosse des deux fils de trame peuvent, le cas échéant, être sensiblement en contact 35 l'une contre l'autre ou être disposées à distance.

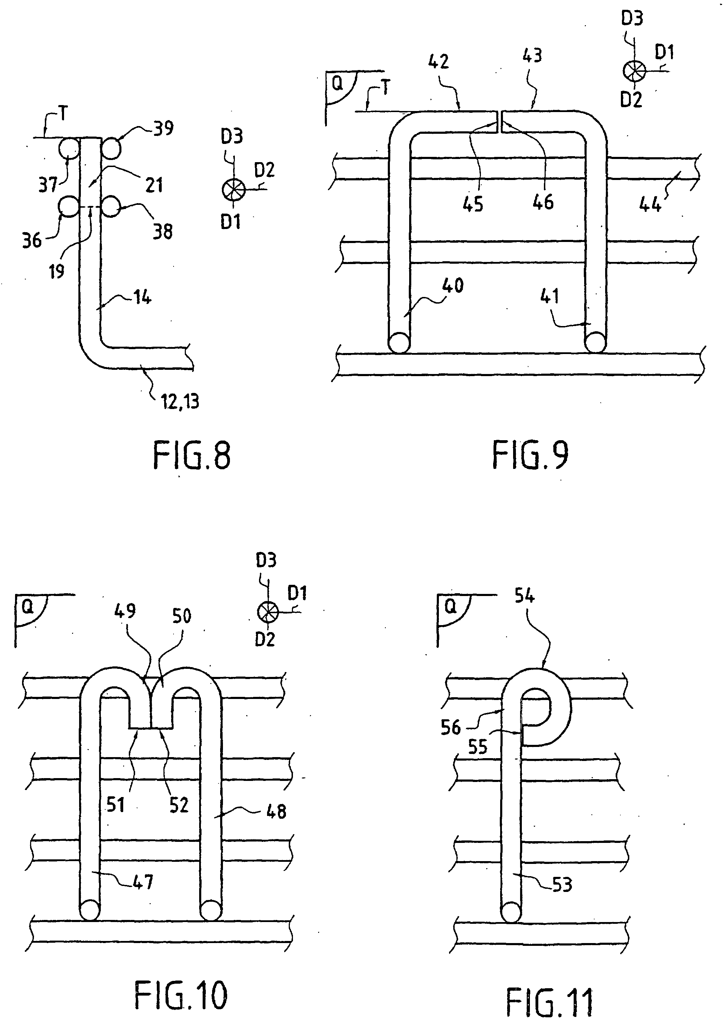

Sur la figure 8 est représentée une variante de réalisation, pouvant être combinée avec chacune de celles mentionnées auparavant. Dans cette variante, au moins une aile du tronçon comprend des fils de chaîne externe 36,37,et internes 38,39. La partie supérieure courbée en crosse 21 du fil de trame ne saille pas au-delà des fils de chaîne supérieurs 37,39, tandis que l'extrémité 19 du fil de trame est masquée, en face interne et en face externe de l'aile, par les fils de chaîne 36,38.

On se rapporte maintenant aux figures 9 à 11 qui illustrent différentes variantes de réalisations des fils de trame, ces variantes de réalisations pouvant être combinées avec les aspects mentionnés auparavant en référence aux figures 1 à 8.

En figure 9 sont représentés deux sections latérales de fils de trame 40,41, assemblés sur les fils de chaînes d'une aile de tronçon, les parties extrêmes 42,43 des fils de trame étant repliées de sorte à se trouver en alignement l'une de l'autre, parallèlement et au-dessus du fil de chaîne supérieur 44 de l'aile du tronçon. Les extrémités 45,46 des fils de trame sont en regard et à faible distance l'une de l'autre.

En figure 10 sont représentés deux sections latérales de fils de trame 47,48, assemblées sur les fils de chaîne d'une aile de tronçon, les parties extrêmes 49,50 des fils de trame étant repliées de sorte à ce que les extrémités 51,52 des fils soient tournées vers la paroi de fond du tronçon.

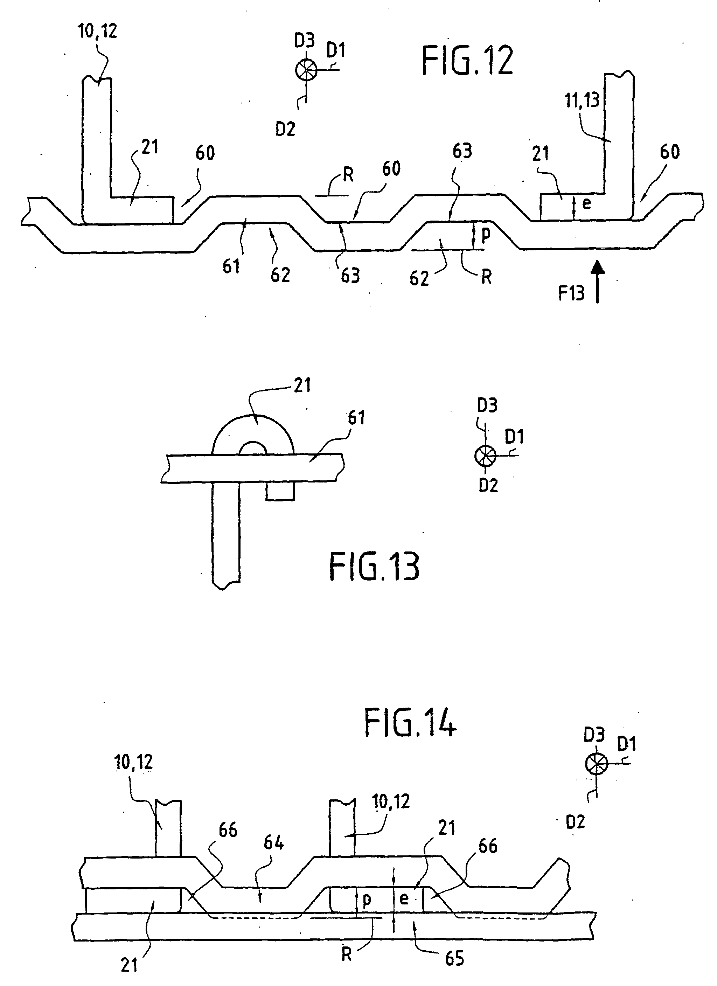

En figure 11 est représentée une section latérale de fil de trame 53, assemblée sur les fils de chaîne d'une aile de tronçon, la partie extrême 54 du fil de trame étant repliée en crosse de sorte que l'extrémité 55 de ce fil vienne en appui et soit éventuellement soudée contre la partie supérieure 56 de la section latérale 53.

On se rapporte maintenant aux figures 12 à 14 qui illustrent deux modes de réalisation des fils de rives.

Dans le type de réalisation dont le principe est schématisé en figure 12, les parties supérieures en crosse 21 des fils de trames s'étendent au moins en partie dans des creux internes 60 d'au moins un fil de rive externe ou interne.

Plus précisément, en référence à la figure 12, un fil de rive externe 61 est par exemple pourvu d'ondulations dans un plan parallèle à la paroi de fond du tronçon. Ces ondulations peuvent, pour des raisons pratiques, être périodiques dans leur répartition, et sensiblement identiques.

Ces ondulations définissent des creux internes 60 et des creux externes 62, limités par une paroi de fond 63 et un plan longitudinal R tangent à leurs ouvertures.

Les creux externes et internes peuvent être sensiblement identiques ou non.

Dans le mode de réalisation de la figure 12, la profondeur p des creux internes 60, mesurée suivant la direction D2, est sensiblement égale à l'épaisseur e des parties extrêmes courbées 21 des fils de trame.

Dans le mode de réalisation de la figure 14, le tronçon est pourvu, sur au moins une de ses ailes, d'un fil de chaîne interne 64 ondulé et d'un fil de chaîne externe sensiblement rectiligne 65 formant fil de rive. La profondeur p des creux externes 66 du fil 64, mesurée suivant D2, est supérieure à l'épaisseur e des parties extrêmes courbées 21 des fils de trame.

Les tronçons de chemins à câbles en treillis de fils qui viennent d'être décrits permettent une protection accrue des câbles vis à vis des risques de blessures, lors de la pose de ces câbles ou de la maintenance. Cette protection est assurée notamment par un masquage des extrémités des fils de trames.

Le procédé de fabrication des tronçons qui viennent d'être décrits n'implique aucun enlèvement de matière sur les fils de trames, et s'avère plus sûr.

## Revendications

1. Tronçon de chemin à câbles en treillis de fils, comprenant des fils longitudinaux, dits fils de chaîne (2-9 ;22-27, 36-39,44,64,65), disposés suivant une direction D1, et des fils transversaux, dits fils de trame (10,11 ; 40,41 ; 47,48 ; 53) établis transversalement, de place en place, le long de ces fils de chaîne, les fils de trames étant pourvus d'une section de base (12,13) et de deux sections latérales (14-17), l'assemblage des fils de chaîne et des fils de trame définissant pour le tronçon une paroi de fond et deux ailes latérales, les ailes latérales étant obtenues par assemblage des fils de chaîne et des sections latérales des fils de trame, ledit tronçon étant **caractérisé en ce qu'**au moins un de ses fils de trame comprend, sur au moins une de ses deux sections latérales, une partie supérieure (20) de cette section latérale et une partie extrême (21) de celle-ci courbées dans un même plan Q1,Q2, dit plan de courbure, ce plan de courbure Q1,Q2 contenant la direction D1 longitudinale, cette courbure assurant la disposition de l'extrémité (19,45,46,51,52,55) de la section latérale en dessous du plan tangent T au bord supérieur de cette section latérale.

2. Tronçon de chemin à câbles selon la revendication 1, **caractérisé en ce que** :
- la partie supérieure de ladite section latérale s'étend sensiblement dans un plan P1, P2 transversal, perpendiculaire à la direction D1 ; et
- la partie extrême (42,43) de ladite section latérale est courbée sensiblement perpendiculairement à la partie supérieure de cette section latérale, de sorte à s'étendre sensiblement parallèlement à la direction D1.

3. Tronçon de chemin à câbles selon la revendication 1, **caractérisé en ce que** la partie extrême (49,50) de ladite section latérale est courbée en U, en V, en pseudo U, en pseudo V.

4. Tronçon de chemin à câbles selon la revendication 1, **caractérisé en ce que** la partie extrême (21,54) de ladite section latérale est courbée en crosse, l'extrémité (19,55) et la partie supérieure (20,56) de cette section latérale (14,53) étant sensiblement en regard.

5. Tronçon de chemin à câbles selon la revendication 4, **caractérisé en ce que** l'extrémité (55) et la partie supérieure (56) de ladite section latérale (53) sont sensiblement en contact.

6. Tronçon de chemin à câbles selon l'une quelconque des revendications 1 à 5, **caractérisé en ce que** ledit plan de courbure Q1,Q2 est sensiblement parallèle au plan d'extension moyen de l'aile du tronçon contenant ladite section latérale (14) du fil de trame (10).

7. Tronçon de chemin à câbles selon l'une quelconque des revendications 1 à 5, **caractérisé en ce que** le plan de courbure Q1,Q2 forme un angle avec le plan Q' d'extension moyen de la partie inférieure de ladite section latérale du fil de trame.

8. Tronçon de chemin à câbles selon l'une quelconque des revendications 1 à 7, **caractérisé en ce qu'**il comprend au moins un fil de trame (10,11) dont les deux parties extrêmes sont courbées, de manières sensiblement identiques, dans des plans de courbure Q1, Q2 sensiblement parallèles aux plans d'extensions moyen des deux ailes du tronçon.

9. Tronçon de chemin à câble selon la revendication 8, **caractérisé en ce qu'**il comprend un plan de symétrie S perpendiculaire à la paroi de fond et contenant la direction longitudinale D1 de disposition des fils de chaîne.

10. Tronçon de chemin à câble selon l'une quelconque des revendications 1 à 9, **caractérisé en ce qu'**il présente une section transversale en U, ses deux ailes étant sensiblement parallèles et s'étendant perpendiculairement à la paroi de fond.

11. Tronçon de chemin à câbles selon l'une quelconque des revendications 1 à 10, **caractérisé en ce que** la partie extrême courbée (21) d'au moins une section latérale (14) de fil de trame (10) saille d'une hauteur h au-delà du fil de chaîne supérieur (2) de l'aile du tronçon sur laquelle est montée ladite section latérale (14).

12. Tronçon de chemin à câbles selon l'une quelconque des revendications 1 à 11, **caractérisé en ce que** les fils de chaînes (2-9) sont au moins en partie disposés en face externe des fils de trame (10,11).

13. Tronçon de chemin à câbles selon l'une quelconque des revendications 1 à 12, **caractérisé en ce que** les fils de trame (10,11) sont sensiblement identiques et équidistants les uns des autres, leur section de base (12,13) et la partie inférieure de leurs sections latérales s'étendant sensiblement transversalement selon des plans P1, P2, les parties extrêmes courbées (21) des sections latérales formant des saillies par rapport à ces plans P1, P2, ces saillies étant toutes tournées dans le même sens, le long dudit tronçon.

14. Tronçon de chemin à câbles selon l'une quelconque des revendications 1 à 12, **caractérisé en ce qu'**au moins deux fils de trames sont disposés de telle sorte que les parties extrêmes courbées d'au moins une de leur section latérale soient en regard l'une de l'autre.

15. Tronçon de chemin à câbles selon la revendication 14, **caractérisé en ce que** les fils de trames sont disposés par paires, chacune desdites paires comprenant deux fils de trame dont les parties extrêmes courbées des sections latérales sont disposées en regard.

16. Tronçon de chemin à câbles selon la revendication 15, **caractérisé en ce que** les parties extrêmes courbées des fils de trame d'au moins une paire de fils de trame sont disposées en contact (35).

17. Tronçon de chemin à câbles selon l'une quelconque des revendications 1 à 16, **caractérisé en ce qu'**il comprend, sur au moins une de ses ailes, un fil de chaîne (61) pourvu d'ondulations définissant des creux internes (60), la partie extrême courbée des fils de trame venant se loger, au moins en partie, dans espace défini par ces creux internes (60).

18. Tronçon de chemin à câbles selon la revendication 17, **caractérisé en ce que** la profondeur p des creux internes (60) est sensiblement égale ou supérieure à l'épaisseur e de la partie extrême courbée des fils de trame.

19. Tronçon de chemin à câbles selon la revendication 16 ou la revendication 17, **caractérisé en ce que** le fil de chaîne pourvu d'ondulations (61) est assemblé sur la face externe des fils de trame.

20. Tronçon de chemin à câbles selon la revendication 16 ou la revendication 17, **caractérisé en ce que** le fil de chaîne pourvu d'ondulations (64) est assemblé sur la face interne des fils de trame, ledit tronçon étant de plus pourvu d'un fil de rive (65), les parties extrêmes courbées des fils de trame s'étendant dans les creux externes formés par le fil de chaîne ondulé.

21. Tronçon de chemin à câbles selon la revendication 20, **caractérisé en ce que** le plan R, tangent à l'ouverture des creux externes (66) du fil ondulé, est disposé en retrait vers l'intérieur du tronçon, par rapport au fil de rive (65).

## Patentansprüche

1. Kabeltrog-Abschnitt aus Drahtgeflecht, der umfasst Längsdrähte, als Kettdrähte bezeichnet (2-9; 22-27, 36-39, 44, 64, 65), die in einer Richtung D1 angeordnet sind, und Querdrähte, als Schussdrähte bezeichnet (10, 11; 40, 41; 47, 48; 53), die stellenweise entlang der Kettdrähte quer dazu angeordnet sind, wobei die Schussdrähte einen Basisabschnitt (12, 13) und zwei Seitenabschnitte (14-17) aufweisen, wobei die Gesamtheit der Kettdrähte und der Schussdrähte eine Bodenwand und zwei Seitenschenkel des Kabeltrogs definieren, wobei die Seitenschenkel gebildet werden durch Zusammenfügen der Kettdrähte und der seitlichen Abschnitte der Schussdrähte, wobei der Kabeltrog-Abschnitt **dadurch gekennzeichnet ist, dass**
mindestens einer seiner Schussdrähte auf mindestens einem seiner seitlichen Abschnitte einen oberen Teil (20) dieses seitlichen Abschnitts und einen Endteil (21) desselben umfasst, die in der gleichen Ebene Q1, Q2, der so genannten Krümmungsebene, gekrümmt sind, wobei diese Krümmungsebene Q1, Q2 die Längsrichtung D1 umfasst, wobei diese Krümmung die Anordnung des Endes (19, 45, 46, 51, 52, 55) des seitlichen Abschnitts unterhalb der Tangentialebene T am oberen Rand dieses seitlichen Abschnitts gewährleistet.

2. Kabeltrog-Abschnitt nach Anspruch 1, **dadurch gekennzeichnet, dass**
- der obere Teil des seitlichen Abschnitts sich im Wesentlichen in einer transversalen Ebene P1, P2 senkrecht zur Richtung D1 erstreckt und
- der Endteil (42, 43) des seitlichen Abschnitts im Wesentlichen senkrecht zu dem oberen Teil dieses seitlichen Abschnitts so gekrümmt ist, dass er sich im Wesentlichen parallel zur Richtung D1 erstreckt.

3. Kabeltrog-Abschnitt nach Anspruch 1, **dadurch gekennzeichnet, dass** der Endteil (49, 50) des seitlichen Abschnitts gekrümmt ist unter Bildung eines U, V, eines Pseudo-U, eines Pseudo-V.

4. Kabeltrog-Abschnitt nach Anspruch 1, **dadurch gekennzeichnet, dass** der Endteil (21, 54) des seitlichen Abschnitts bogenförmig gekrümmt ist, wobei das Ende (19, 55) und der obere Teils (20, 56) dieses seitlichen Abschnitts (14, 53) im Wesentlichen einander gegenüberliegen.

5. Kabeltrog-Abschnitt nach Anspruch 4, **dadurch gekennzeichnet, dass** das Ende (55) und der obere Teil (56) des seitlichen Abschnitts (53) im Wesentlichen miteinander in Kontakt stehen.

6. Kabeltrog-Abschnitt nach einem der Ansprüche 1 bis 5, **dadurch gekennzeichnet, dass** die Krümmungsebene Q1, Q2 im Wesentlichen parallel zur mittleren Vertängerungsebene des Kabeltrogschenkels, der den seitlichen Abschnitt (14) des Schussdrahtes (10) enthält, angeordnet ist.

7. Kabeltrog-Abschnitt nach einem der Ansprüche 1 bis 5, **dadurch gekennzeichnet, dass** die Krümmungsebene Q1, Q2 mit der mittleren Verlängerungsebene Q' des unteren Teils des seitlichen Abschnitts des Schussdrahtes einen Winkel bildet.

8. Kabeltrog-Abschnitt nach einem der Ansprüche 1 bis 7, **dadurch gekennzeichnet, dass** er mindestens einen Schussdraht (10, 11) umfasst, dessen beide Endteile im Wesentlichen identisch zueinander gekrümmt sind in Krümmungsebenen Q1, Q2, die im Wesentlichen parallel zu den mittleren Verlängerungsebenen der beiden Schenkel des Kabeltrogs verlaufen.

9. Kabeltrog-Abschnitt nach Anspruch 8, **dadurch gekennzeichnet, dass** er eine Symmetrie-Ebene S senkrecht zur Bodenwand umfasst, welche die Längsrichtung D1 der Anordnung der Kettdrähte umfasst.

10. Kabeltrog-Abschnitt nach einem der Ansprüche 1 bis 9, **dadurch gekennzeichnet, dass** er einen U-förmigen Querschnitt aufweist, wobei seine beiden Schenkel im Wesentlichen parallel zueinander verlaufen und sich senkrecht zu der Bodenwand erstrecken.

11. Kabeltrog-Abschnitt nach einem der Ansprüche 1 bis 10, **dadurch gekennzeichnet, dass** der gekrümmte Endteil (21) mindestens eines seitlichen Abschnitts (14) des Schussdrahtes (10) in einer Höhe h über den oberen Kettdraht (2) des Schenkels des Kabeltroges vorsteht, an der der seitliche Abschnitt (14) befestigt ist.

12. Kabeltrog-Abschnitt nach einem der Ansprüche 1 bis 11, **dadurch gekennzeichnet, dass** die Kettdrähte (2-9) mindestens zum Teil auf der äußeren Oberfläche der Schussdrähte (10, 11) angeordnet sind.

13. Kabeltrog-Abschnitt nach einem der Ansprüche 1 bis 12, **dadurch gekennzeichnet, dass** die Schussdrähte (10, 11) im Wesentlichen identisch sind und im Wesentlichen gleiche Abstände voneinander haben, wobei sich ihr Basisabschnitt (12, 13) und der obere Teil ihrer seitlichen Abschnitte sich im Wesentlichen transversal entlang der Ebenen P1, P2 erstrecken, die gekrümmten Endteile (21) der seitlichen Abschnitte Erhebungen gegenüber diesen Ebenen P1, P2 bilden und diese Erhebungen alle in der gleichen Richtung entlang des Kalbetroges gebogen sind.

14. Kabeltrog-Abschnitt nach einem der Ansprüche 1 bis 12, **dadurch gekennzeichnet, dass** mindestens zwei Schussdrähte so angeordnet sind, dass die gekrümmten Endteile mindestens eines ihres seitlichen Abschnitts einander gegenüberliegen.

15. Kabeltrog-Abschnitt nach Anspruch 14, **dadurch gekennzeichnet, dass** die Schussdrähte paarweise angeordnet sind, wobei jedes der Paare zwei Schussdrähte aufweist, wobei deren gekrümmte Endteile der seitlichen Abschnitte einander gegenüberliegend angeordnet sind.

16. Kabeltrog-Abschnitt nach Anspruch 15, **dadurch gekennzeichnet, dass** die gekrümmten Endteile der Schussdrähte mindestens eines Paares von Schussdrähten miteinander in Kontakt stehen (35).

17. Kabeltrog-Abschnitt nach einem der Ansprüche 1 bis 16, **dadurch gekennzeichnet, dass** er auf mindestens einem seiner Schenkel einen Kettdraht (61) aufweist, der wellenförmige Krümmungen aufweist, die innere Vertiefungen (60) definieren, wobei der gekrümmte Endteil der Schussdrähte mindestens zum Teil in dem Zwischenraum zum Liegen kommt, der durch diese inneren Vertiefungen (60) definiert ist.

18. Kabeltrog-Abschnitt nach Anspruch 17, **dadurch gekennzeichnet, dass** die Tiefe p der inneren Vertiefungen (60) im Wesentlichen gleich der oder gröβer ist als die Dicke e des gekrümmten Endteils der Schussdrähte.

19. Kabeltrog-Abschnitt nach Anspruch 16 oder 17, **dadurch gekennzeichnet, dass** der Kettdraht, der mit wellenförmigen Krümmungen (61) ausgestattet ist, an der äußeren Oberfläche der Schussdrähte befestigt ist.

20. Kabeltrog-Abschnitt nach Anspruch 16 oder 17, **dadurch gekennzeichnet, dass** der Kettdraht, der mit wellenförmigen Krümmungen (64) ausgestattet ist, auf der inneren Oberfläche der Schussdrähte befestigt ist, wobei der Kabeltrog darüber hinaus einen Bankettdraht (65) aufweist und die gekrümmten Endteile der Schussdrähte sich in den äußeren Vertiefungen erstrecken, die durch den gewellten Kettdraht gebildet werden.

21. Kabeltrog-Abschnitt nach Anspruch 20, **dadurch gekennzeichnet, dass** die Ebene R, die an die Öffnung der äußeren Vertiefungen (66) des gewellten Drahtes angrenzt, an dem Kabeltrog nach innen zurückversetzt, bezogen auf den Bankettdraht (65), angeordnet ist.

## Claims

1. Section of wire mesh cableway comprising longitudinal wires, called warp wires (2-9; 22-27, 36-39, 44, 64, 65), arranged in a direction D1, and transverse wires, called weft wires (10, 11; 40, 41; 47, 48; 53), established transversely, from place to place, along these warp wires, the weft wires being provided with a base section (12, 13) and two lateral sections (14-17), the assembly of the warp wires and the weft wires defining for the section a bottom wall and two side webs, the side webs being achieved by assembling the warp wires and the lateral sections of the weft wires, the said section being **characterised in that** at least one of its weft wires comprises, on at least one of its two lateral sections, an upper part (20) of this lateral section and an end part (21) of the latter curved in the same plane Q1, Q2, called the plane of curvature, this plane of curvature Q1, Q2 containing the longitudinal direction D1, this curvature ensuring the arrangement of the end (19, 45, 46, 51, 52, 55) of the lateral section under the plane T tangential to the upper edge of this lateral section.

2. Section of cableway according to Claim 1, **characterised in that**:
- the upper part of the said lateral section extends more or less in a transverse plane P1, P2, perpendicular to the direction D1; and
- the end part (42, 43) of the said lateral section is curved more or less perpendicular to the upper part of this lateral section so as to extend more or less parallel to the direction D1.

3. Section of cableway according to Claim 1, **characterised in that** the end part (49, 50) of the said lateral section is curved in a U-shape, in a V-shape, as a pseudo-U, as a pseudo-V.

4. Section of cableway according to Claim 1, **characterised in that** the end part (21, 54) of the said lateral section is curved like a crook, the end (19, 55) and the upper part (20, 56) of this lateral section (14, 53) being more or less opposite.

5. Section of cableway according to Claim 4, **characterised in that** the end (55) and the upper part (56) of the said lateral section (53) are more or less in contact.

6. Section of cableway according to any one of the Claims 1 to 5, **characterised in that** the said plane of curvature Q1, Q2 is more or less parallel to the mean extension plane of the web of the section containing the said lateral section (14) of the weft wire (10).

7. Section of cableway according to any one of the Claims 1 to 5, **characterised in that** the plane of curvature Q1, Q2 forms an angle with the mean plane of extension Q' of the lower part of the said lateral section of the weft wire.

8. Section of cableway according to any one of the Claims 1 to 7 **characterised in that** it comprises at least one weft wire (10, 11), the two end parts of which are curved more or less identically, in planes of curvature Q1, Q2 more or less parallel to the mean extension planes of the two webs of the section.

9. Section of cableway according to Claim 8, **characterised in that** it comprises a plane of symmetry S perpendicular to the bottom wall and containing the longitudinal arrangement direction D1 of the warp wires.

10. Section of cableway according to any one of the Claims 1 to 9, **characterised in that** it has a U-shaped cross section, its two webs being more or less parallel and extending perpendicular to the bottom wall.

11. Section of cableway according to any one of the Claims 1 to 10, **characterised in that** the curved end part (21) of at least one lateral section (14) of weft wire (10) projects by a height h beyond the top warp wire (2) of the web of the section on which the said lateral section (14) is mounted.

12. Section of cableway according to any one of the Claims 1 to 11, **characterised in that** the warp wires (2-9) are at least partly arranged on the outer face of the weft wires (10, 11).

13. Section of cableway according to any one of the Claims 1 to 12, **characterised in that** the weft wires (10, 11) are more or less identical and equidistant from each other, their base section (12, 13) and the lower part of their lateral sections extending more or less transversely along the planes P1, P2, the curved end parts (21) of the lateral sections forming projections in relation to these planes P1, P2, these projections all being turned in the same direction, along the said section.

14. Section of cableway according to any one of the Claims 1 to 12, **characterised in that** at least two weft wires are arranged so that the curved end parts of at least one of their lateral sections are opposite one another.

15. Section of cableway according to Claim 14, **characterised in that** the weft wires are arranged in pairs, each of the said pairs comprising two weft wires, the curved end parts of the lateral sections of which are arranged opposite.

16. Section of cableway according to Claim 15, **characterised in that** the curved end parts of the weft wires of at least one pair of weft wires are arranged in contact (35).

17. Section of cableway according to any one of the Claims 1 to 16, **characterised in that** it includes, on at least one of its webs, a warp wire (61) provided with waves defining inside depressions (60), the curved end part of the weft wires being housed, at least partly, in the space defined by these inside depressions (60).

18. Section of cableway according to Claim 17, **characterised in that** the depth p of the inside depressions (60) is more or less equal to or greater than the thickness e of the curved end part of the weft wires.

19. Section of cableway according to Claim 16 or Claim 17, **characterised in that** the warp wire which has waves (61) is assembled to the outside face of the weft wires.

20. Section of cableway according to Claim 16 or Claim 17, **characterised in that** the warp wire with waves (64) is assembled to the inside face of the weft wires, the said section being moreover provided with an edge wire (65), the curved end parts of the weft wires extending into the outside depressions formed by the wavy warp wire.

21. Section of cableway according to Claim 20, **characterised in that** the plane R, tangential to the opening of the outside depressions (66) of the wavy wire, is set back towards the inside of the section in relation to the edge wire (65).
